# EUROPEAN PATENT APPLICATION

(11) **EP 4 621 895 A1**
(43) Date of publication of application: **24.09.2025**
(21) Application number: 24211447.8
(22) Date of filing: 07.11.2024
(51) Int. Cl.: H01M 10/04, H01M 10/0525, H01M 10/0585, H01M 50/103, H01M 50/15, H01M 50/249, H01M 50/40, H01M 50/528, H01M 50/536, H01M 50/548, H01M 50/553

(54) **METHOD FOR MANUFACTURING SECONDARY BATTERY AND SECONDARY BATTERY MANUFACTURED USING THE SAME**

(30) Priority: 15.03.2024 KR 20240036414
(71) Applicant: SAMSUNG SDI CO., LTD., Yongin-si, Gyeonggi-do 17084 (KR)
(72) Inventor: KIM, Ki Tae, 17084 Yongin-si (KR)
(74) Representative: Marks & Clerk LLP

(57) **Abstract**

A method for manufacturing a secondary battery, comprises electrically connecting a first current collector plate to the first electrode plate of an electrode assembly including: a first electrode plate; a second electrode plate; and a separator between the first electrode plate and the second electrode plate, comprising a separator pressing allowance space and a part that is not pressed even when pressed; and pressing the first current collector plate in the direction of the electrode assembly by a set pressing amount to press at least a portion of the separator pressing allowance space of the separator that protrudes outward from the electrode assembly relative to the first electrode plate, wherein the set pressing amount may be set based on a length of an initial gap between the first current collector plate and the separator and a length of an initial separator pressing allowance space between the separator and the first electrode plate.

## Description

### BACKGROUND

### 1. Field

Aspects of some embodiments of the present disclosure relate to a method for manufacturing a secondary battery and a secondary battery manufactured using the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Meanwhile, recently, interest in electric vehicles has increased to prevent or reduce environmental pollution, and accordingly, high-capacity secondary batteries are being adopted for electric vehicles. These secondary batteries may desirably have characteristics such as high density, high output, and stability.

The above information disclosed in this Background section is for enhancement of understanding of the background of the present disclosure, and therefore, it may contain information that does not constitute related (or prior) art.

### SUMMARY

The present disclosure provides a method for manufacturing a secondary battery and a secondary battery manufactured using the same, in which the capacity is increased by securing an internal space in a cell and the flow of an electrode assembly inside the cell can be suppressed.

These and other aspects and features of the present disclosure will be described in or will be apparent from the following description of embodiments of the present disclosure.

According to a first aspect, there is provided a method for manufacturing a secondary battery, comprising the steps of: electrically connecting a first current collector plate to the first electrode plate of an electrode assembly including a first electrode plate, a second electrode plate, and a separator interposed between the first electrode plate and the second electrode plate, comprising a separator pressing allowance space and a part that is not pressed even when pressed; and pressing the first current collector plate in the direction of the electrode assembly by a set pressing amount to press at least a portion of the separator pressing allowance space of the separator that protrudes outward from the electrode assembly relative to the first electrode plate, wherein the set pressing amount may be set on the basis of the length of an initial gap between the first current collector plate and the separator and the length of an initial separator pressing allowance space between the separator and the first electrode plate.

In some examples, the pressing step may include bringing the separator and the first current collector plate into close contact with each other, so that there is no gap between the separator and the first current collector plate.

In some examples, the initial separator pressing allowance space may be set to a length obtained by subtracting a length between an end of the part that is not pressed even when pressed of the separator and a protruding position of the first electrode plate and the length between the protruding position of the first electrode plate and an aligned position of the first electrode plate from a length between the end of the separator pressing allowance space of the separator and the aligned position of the first electrode plate.

In some examples, an area corresponding to the length between the protruding position of the first electrode plate and the aligned position of the first electrode plate may be a reversal preventive area of positive and negative electrode positions.

In some examples, an area corresponding to the length between the end of the separator and the protruding position of the first electrode plate may be a positive and negative electrode short preventive area.

In some examples, the length of the initial separator pressing allowance space may be reduced after the pressing step.

In some examples, an initial design width of the separator may be reduced in length after the pressing step.

In some examples, a step of coupling a first insulation plate to one side of the first current collector plate after electrically connecting the first current collector plate to the first electrode plate may be further included.

In some examples, the step of attaching an insulation member to at least one side of the electrode assembly and the insulation plate.

In some examples, the pressing step may include a pressing step on the side surface of the separator on the basis of the longitudinal direction of the electrode assembly.

In some examples, the set pressing amount may be set to 0.7% to 1.2% of the length between the outer surface of the first current collector plate before the pressing step and an outer surface of the second current collector plate coupled to the other side of the electrode assembly.

In some examples, the length of the initial pressing allowance space may be set to 0.84% to 0.86% of the initial design width of the separator.

In some examples, the changed length of the separator pressing allowance space after the pressing step may be 38% to 42% of the length of the initial pressing allowance space.

According to another aspect of the present disclosure, there is provided a secondary battery manufactured by the secondary battery manufacturing method of the first aspect.

In some examples, an end of a separator and a first current collector plate may be brought into close contact with each other without a gap.

In some examples, at least a portion of the first current collector plate may be coupled to the separator pressing allowance space of the separator.

In some examples, a case that accommodates the electrode assembly and the first current collector plate and is open on both sides; a first cap plate that seals one side opening of the case; and a first terminal that is electrically connected to the first current collector plate and is exposed to an exterior portion of the first cap plate, may be included.

In some examples, a first protruding current collector plate that is connected to the outer surface of the first current collector plate and is in contact with and coupled to the inner surface of the first terminal may be further included.

As described above, according to some embodiments of the present disclosure, provided are a method for manufacturing a secondary battery and a secondary battery manufactured using the same, in which by performing a pressing step to ensure close contact between a current collector plate and a separator, the capacity can be increased or relatively increased by securing the space inside a cell, and the flow of an electrode assembly inside the cell can be suppressed.

However, the aspects and features of the present disclosure are not limited to those described above, and other aspects and features not expressly described herein will be clearly understood by a person skilled in the art from the description of example embodiments of the present disclosure described below.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a perspective view of a secondary battery according to an embodiment of the present disclosure.
FIG. 2 is a cross-sectional view taken along line 2-2' in the secondary battery of FIG. 1.
FIGS. 3A to 3C are diagrams for explaining a pressing step of a method for manufacturing a secondary battery, according to an embodiment of the present disclosure.
FIG. 4 is a diagram showing a state of a separator before being coupled to a current collector, according to an embodiment of the present disclosure.
FIG. 5 is a diagram showing a state of a separator after being coupled to a current collector, according to an embodiment of the present disclosure.
FIG. 6 is a diagram showing a state after the pressing step, according to an embodiment of the present disclosure.
FIG. 7 is a perspective view of an example of a battery module;
FIGS. 8A and 8B illustrate perspective views of an example of a battery pack; and
FIGS. 9A and 9B illustrate perspective and side views of examples of a vehicle body and vehicle components.

### DETAILED DESCRIPTION OF THE DRAWINGS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

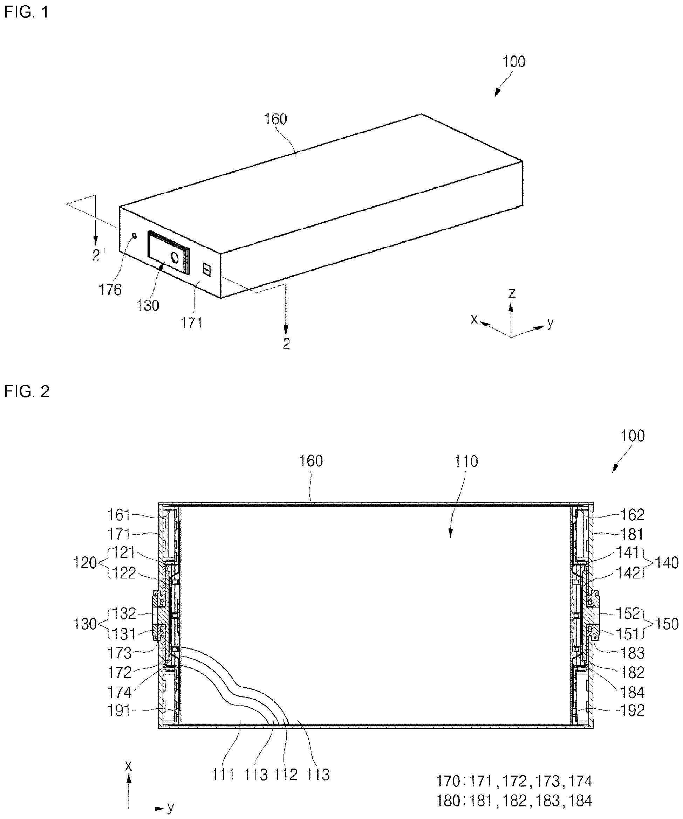

FIG. 1 is a perspective view of a secondary battery 100 according to an embodiment of the present disclosure. FIG. 2 is a cross-sectional view taken along line 2-2' in the secondary battery 100 of FIG. 1. Hereinafter, a structure of the secondary battery 100, according to embodiments of the present disclosure, will be described.

Referring to FIGS. 1 and 2, the secondary battery 100 may include an electrode assembly 110, a first collector 120, a first terminal 130, a second collector 140, a second terminal 150, a case 160, a first cap assembly 170, and a second cap assembly 180.

The electrode assembly 110 may be provided by winding or stacking a first electrode plate 111, a separator 113, and a second electrode plate 112, each of which is provided in a thin plate shape or film shape. When the electrode assembly 110 is a rolled stack, a winding axis may be parallel to a longitudinal direction (e.g., the y direction) of the case 160. In some embodiments, the electrode assembly 110 may be a stacked-type electrode assembly rather than a winding-type, but the shape or type of the electrode assembly 110 is not limited. In some embodiments, the electrode assembly 110 may be a Z-stack electrode assembly in which the first electrode plate 111 and the second electrode plate 112 are inserted into both sides of the separator 113, which is then folded (or bent) in the form of a Z-stack. In some embodiments, the electrode assembly 110 may be stacked so that one or more electrode assemblies 110 are adjacent to each other and accommodated in the case 160. The number of electrode assemblies 110 in the case 160 is not limited.

The first electrode plate 111 of the electrode assembly 110 may act as a negative electrode, and the second electrode plate 112 may act as a positive electrode, but in other embodiments the first electrode plate 111 may act as a positive electrode and the second electrode plate 112 may act as a negative electrode.

The first electrode plate 111 may be formed by applying a first electrode active material, such as graphite or carbon, to a first electrode collector made of a metal foil, such as copper, a copper alloy, nickel, or a nickel alloy. The first electrode plate 111 may include a first electrode tab (e.g., a first non-coating portion) 114 that is not coated with the first electrode active material. The first electrode tab may be a passage through which current flows between the first electrode plate 111 and the first collector 120. In some embodiments, the first electrode tab may be formed by being cut in advance to protrude to one side when the first electrode plate 111 is manufactured and may protrude more to one side than the separator 113, which is not cut.

The second electrode plate 112 may be provided by applying a second electrode active material, such as transition metal oxide, to a second electrode collector made of metal foil, such as aluminum or an aluminum alloy. The second electrode plate 112 may include a second electrode tab (e.g., a second non-coating portion) 115 that is not coated with the second electrode active material. The second electrode tab may be a passage through which current flow between the second electrode plate 112 and the second collector 140. In some embodiments, the second electrode tab may be formed by being cut in advance to protrude to the other side when the second electrode plate 112 is manufactured and may protrude more to the other side than the separator 113, which is not cut.

In some embodiments, the first electrode tab may be located on a side surface (e.g. at a left end) of the electrode assembly 110, and the second electrode tab may be located on a side surface (e.g. at a right end) of the electrode assembly 110. Here, the left and right sides are referred to for convenience of explanation based on the orientation of the secondary battery 100 in FIGS. 1 and 2, and the orientation of the secondary battery 100 may be changed when the secondary battery 100 is rotated left and right or up and down.

In some embodiments, the separator 113 may be interposed between the first electrode plate 111 and the second electrode plate 112 to prevent or reduce instances of a short circuit therebetween while enabling movement of lithium ions therebetween. The separator 113 may include polyethylene, polypropylene, or a composite film of polyethylene and polypropylene. In some embodiments, the separator 113 may be replaced with an inorganic solid electrolyte, such as a sulfide, an oxide, or a phosphate compound, which does not require a liquid or gel electrolyte. In some examples, a fixing member 116 may be attached to at least a portion of the electrode assembly 110. The fixing member 116 may fix and insulate the electrode assembly 110. The fixing member 116 may cover a portion of the perimeter of the electrode assembly 110, and a plurality of fixing members 116 may be attached.

The first electrode tab of the first electrode plate 111 and the second electrode tab of the second electrode plate 112 may be respectively located at both ends of the electrode assembly 110, as described above. In some embodiments, the electrode assembly 110 may be accommodated in the case 160 together with the electrolyte. In some embodiments, the electrolyte may include an organic solvent, such as EC, PC, DEC, EMC, or DMC, and a lithium salt, such as LiPF₆ or LiBF₄. In some embodiments, the electrolyte may be a liquid or a gel. In some embodiments, an inorganic-based solid electrolyte may be used such that a liquid or gel electrolyte may be omitted.

In addition, in the electrode assembly 110, the first collector 120 and the second collector 140 may be welded and connected to the first electrode tab of the first electrode plate 111 and the second electrode tab of the second electrode plate 112, which are exposed at both sides of the electrode assembly 110, respectively.

The first collector 120 may be made of a metal and may electrically connect the first electrode plate 111 and the first terminal 130 to each other. In some embodiments, the first collector 120 may be accommodated inside the case 160 and interposed between the first cap plate 171 and the electrode assembly 110. The first collector 120 may include a first collector plate 121 that is in contact with and coupled to the first electrode tab (e.g., first the non-coating portion) of the first electrode plate 111 and a first protruding collector plate (e.g., a first protruding collector) 122 that is in contact with and coupled to the first terminal 130. The first collector plate 121 and the first protruding collector plate 122 may be integrally formed or in other embodiments separably provided (i.e. as separate components). The first collector 120 may be made of copper or a copper alloy.

The first collector plate 121 may extend (e.g., may primarily extend) in a first direction (e.g., the x direction), which is a longitudinal direction of the first cap plate 171 that is on one surface of the electrode assembly 110 and may have a substantially plate shape. The first collector plate 121 may have the same polarity as the first electrode plate 111 by being coupled thereto by welding in the state of being in contact with the first electrode tab exposed at one end of the electrode assembly 110.

In some embodiments, a space may be defined inside (or under) the first collector 120. A first glue member (e.g., a first adhesive member) 174 may be provided in the space to fix the separator of the electrode assembly 110.

The first protruding current collector plate 122 may be in contact with the outer surface of the first current collector plate 121, and may be in contact with and welded to the inner surface of the first terminal 130.

The first terminal 130 is made of a metal and may be in contact with and welded to the first protruding current collector plate 122 so as to be electrically connected thereto. In some examples, the first terminal 130 may include a first terminal plate 131 and a first terminal through hole 132.

The first terminal 130 may be made of aluminum or an aluminum alloy. In some embodiments, when the first terminal 130 is the negative electrode, the first terminal 130 and the first collector 120 may be made of the same metal. However, in some embodiments, the first terminal 130 and the first collector 120 may be made of different metals. In some embodiments, a clad sheet may be provided between the first terminal 130 and the first collector 120. The clad sheet may couple and electrically connect the first terminal 130 to the first collector 120 when they are made of different metals. The clad sheet may be a sheet in which an aluminum sheet and a copper sheet are bonded by thermal compression. For example, the clad sheet may be a sheet in which aluminum, having a thickness of about 2 T, and copper, having a thickness in a range of about 0.5 T to about 0.7 T, are bonded by thermal compression. The aluminum sheet of the clad sheet may be coupled to the first terminal 130 by welding, and the copper sheet may be coupled to the first collector 120 by welding.

The first terminal plate 131 may be located outside or above the first cap plate 171. In some embodiments, the first terminal through-hole 132 may extend in an inward direction from an outer surface of the first terminal plate 131. An area of the first terminal plate 131 where the first terminal through-hole 132 is provided may have a thickness less than that of each of the other areas of the first terminal plate 131.

In some embodiments, a first insulating gasket 172 may be interposed between the first terminal plate 131 and the first cap plate 171. In some embodiments, a first seal gasket 173 may be interposed between the outer surface of the first terminal plate 131 and the first cap plate 171 to seal the space between the first terminal 130 and the first cap plate 171.

According to some embodiments, the first terminal plate 131 may be in contact with and coupled to the first protruding collector plate 122 of the first collector 120 at one surface. In some embodiments, the first terminal plate 131 of the first terminal 130 may be exposed and protrude from the outside of the first cap plate 171.

The second collector 140 may be made of a metal and may electrically connect the second electrode plate 112 and the second terminal 150 to each other. The second collector 140 may be provided as a metal plate and may include a second collector plate 141 that is in contact with and coupled to the second electrode tab of the second electrode plate 112 and a second protruding collector plate 142 that is in contact with and coupled to the second terminal 150. In some embodiments, the second collector 140 may be coupled to the electrode assembly 110 and the second terminal 150 in a shape that is symmetrical to the first collector 120 with respect to the electrode assembly 110. In some embodiments, the second collector 140 may be made of aluminum or an aluminum alloy.

The second terminal 150 may be made of a metal and may be electrically connected to the second collector 140. In some embodiments, the second terminal 150 may include a second terminal plate 151 having a second terminal through-hole (e.g., a second terminal opening) 152.

In some embodiments, the second terminal plate 151 may be located outside (e.g., above) the second cap plate 181. In some embodiments, a second insulating gasket 182 may be interposed between the second terminal plate 151 and the second cap plate 181. In some embodiments, a second seal gasket 183 may be interposed between the second terminal plate 151 and the second cap plate 181.

The second terminal 150 may have the same shape and structure as the first terminal 130. However, the second terminal 150 may be coupled to the electrode assembly 110 through the second collector 140 in a shape that is symmetrical to the first terminal 130 with respect to the electrode assembly 110. In some embodiments, the second terminal 150 may be made of aluminum or an aluminum alloy. In some embodiments, because the second terminal 150 and the second collector 140 are made of the same metal, the second terminal 150 and the second collector 140 may be directly coupled to each other by welding.

The case 160 may have a hollow substantially rectangular parallelepiped shape with openings 161, 162 defined at both sides (or both ends), and the electrode assembly 110 may be inserted into the case 160 through opening 161 or 162 in a state in which it is coupled to the first and second collectors 120, 140.

The case 160 may have two long side surfaces in a rectangular shape, which connect (or extend between) top and bottom surfaces extending in a second direction (e.g., the y direction), that is a longitudinal direction, and extend in the second direction (e.g., the y direction). In the case 160, the top and bottom surfaces and the two long side surfaces may be integrated with (e.g., may be integrally formed with) each other.

The case 160 may have a vent hole (e.g., a vent opening) passing through one of the long side surfaces. A safety vent may be installed in the vent hole in the case 160. In some embodiments, the safety vent may be provided with (or may be provided as) a notch that is thinner than other areas to open (or burst) at a set (or reference) pressure.

The first cap assembly 170 may be coupled at the left opening 161 in the case 160. In some embodiments, the first cap assembly 170 may include the first cap plate 171, the first insulating gasket 172, the first seal gasket 173, and the first glue member (e.g., first adhesive member) 174.

The first cap plate 171 may have a flat rectangular plate shape to seal the left opening 161 in the case 160. The first cap plate 171 may have the first terminal through-hole (e.g., a first terminal opening) 132 passing between an outer surface and an inner surface thereof and an electrolyte injection port. The protrusion of the first protruding collector plate 122 may pass through the first terminal through-hole 132 in the first cap plate 171 and may be coupled to the first terminal plate 131. In some embodiments, after the first cap plate 171 is coupled to the case 160 and the electrolyte is injected into the case 160, the electrolyte injection port may be sealed by a stopper 176.

The first insulating gasket 172 may be interposed between the inner surface of the first cap plate 171 and the first terminal plate 131. The first insulating gasket 172 may be in close contact with the inner surface of the first cap plate 171 and may also be in close contact with the first seal gasket 173. The first insulating gasket 172 may be made of an insulating material to insulate the first cap plate 171 and the first terminal plate 131 from each other.

In some embodiments, the first seal gasket 173 may be made of an insulating material and may be provided between the first cap plate 171 and the first terminal plate 131 or on the outer surface of the first terminal plate 131 to seal a gap between the first cap plate 171 and the first terminal plate 131. The first seal gasket 173 may prevent or reduce instances of external contaminants such as moisture penetrating into the secondary battery 100 or prevent or reduce instances of the electrolyte contained in the secondary battery 100 leaking to the outside. The first seal gasket 173 may be manufactured with the first insulating gasket 172 by using an insert molding method.

In some embodiments, the first seal gasket 173 may be integrated with the first insulating gasket 172 by injection molding and may be interposed between the first terminal 130 and the first cap plate 171. In some embodiments, the first cap plate 171 may be electrically separated from (e.g., electrically insulated from) the first terminal 130 and the first protruding collector plate 122 by the first insulating gasket 172 and the first seal gasket 173.

In addition, in some examples, the secondary battery 100 may include a first insulation plate 191 and a second insulation plate 192. The first insulation plate 191 may be interposed between the first collector 120 and the first cap plate 171 to form electrical insulation between the first collector 120 and the first cap plate 171. The second insulation plate 192 may be interposed between the second collector 140 and the second cap plate 181 to form electrical insulation between the second collector 140 and the second cap plate 181. The first insulation plate 191 and the second insulation plate 192 may be made of a plastic material with high electrical insulation, such as polyamide (PA), polyethylene (PE), or polypropylene (PP).

The second cap assembly 180 may be coupled at the right opening 162 in the case 160. In some embodiments, the second cap assembly 180 may include the second cap plate 181, the second insulating gasket 182, the second seal gasket 183, and a second glue member (e.g., a second adhesive member) 184. The second cap assembly 180 may have the same shape and structure as the first cap assembly 170. In some embodiments, the coupling shape and structure of the second cap assembly 180 and the second terminal 150 may be the same as those of the first cap assembly 170 and the first terminal 130. However, the coupling shape of the second cap assembly 180 and the second terminal 150 may be symmetrical to the coupling shape of the first cap assembly 170 and the first terminal 130 with respect to the case 160.

In the secondary battery 100, the first cap assembly 170 coupled to the first terminal 130 may be coupled to an opening at one side of the case 160, and the second cap assembly 180 coupled to the second terminal 150 may be coupled to an opening at the other (e.g., the opposite) side of the case 160. Thus, the first terminal 130 and the second terminal 150 may be located at opposite sides of the case 160. The secondary battery 100 may be provided with the first terminal 130 and the second terminal 150 at both the sides thereof, and thus, if a plurality of secondary batteries 100 are coupled together in the form of a module, a cooling member may be coupled to each of the upper and lower areas of the case 160. In some embodiments, deterioration of the secondary battery 100 may be reduced by improved cooling performance.

For example, in the battery module, when the long side surfaces of the plurality of secondary batteries 100 are arranged to face each other, the first terminals 130 and/or the second terminals 150, which are respectively exposed at both sides of each secondary battery 100, may be electrically connected to each other.

In some embodiments, the first terminal 130 and the second terminal 150 may be provided at both the sides of the secondary battery 100. Thus, if the plurality of secondary batteries 100 are coupled together in the form of the module, because charging/discharging current flows along each terminal 130, 150 at both of the sides, the two terminals 130, 150 may be provided at opposite sides to prevent or reduce deterioration of the electrode assembly 110 that may occur compared to a case in which the charging/discharging current flows along two terminals at one side (e.g., at the same side) of the case. In some embodiments, if the plurality of secondary batteries 100 are coupled together in the form of the module, space utilization may be improved because the respective terminals 130, 150 are connected to each other at both of the sides.

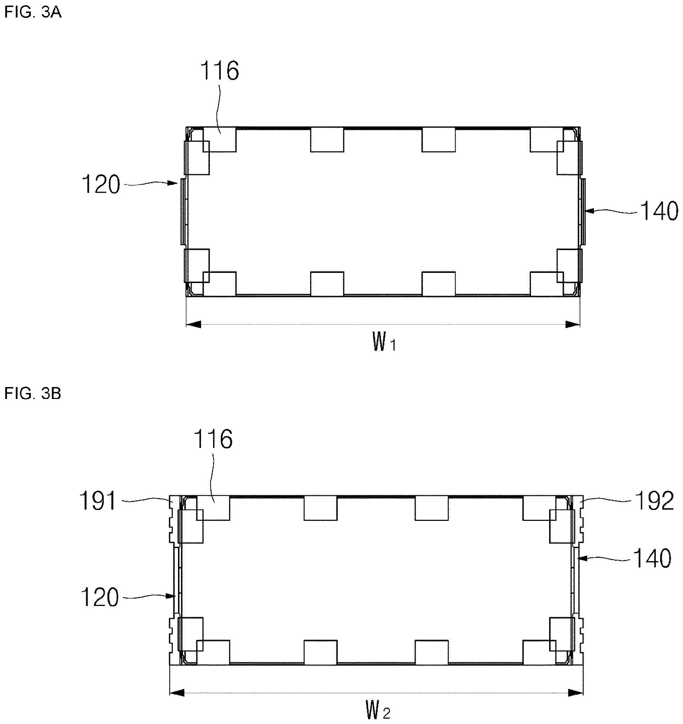

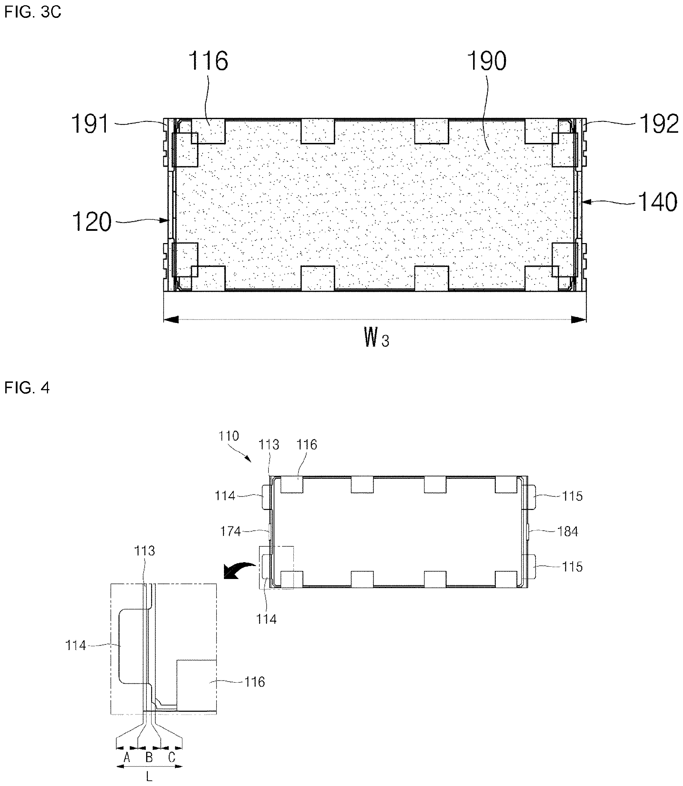

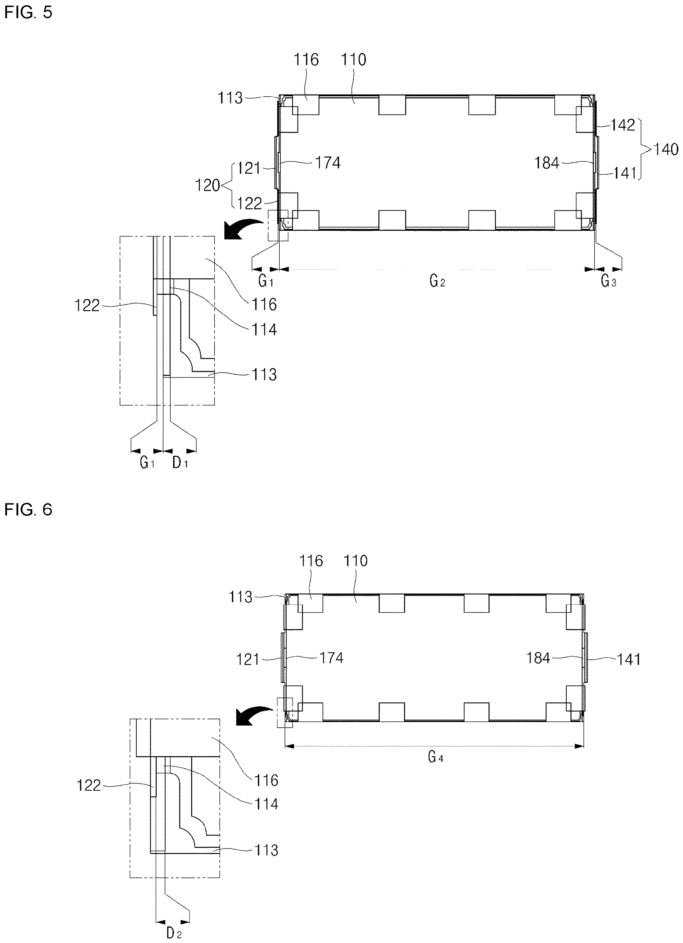

FIGS. 3A to 3C are diagrams for explaining a pressing step of a method for manufacturing a secondary battery according to an embodiment of the present disclosure, FIG. 4 is a diagram showing a state of a separator before being coupled to a current collector, according to an embodiment of the present disclosure, FIG. 5 is a diagram showing a state of a separator after being coupled to a current collector, according to an embodiment of the present disclosure, and FIG. 6 is a diagram showing a state after the pressing step, according to an embodiment of the present disclosure.

Meanwhile, in the structures of the current collectors 120, 140 according to some embodiments, gaps may be present between the separator 113 and the current collector plates 121, 141 to ensure weldability and prevent or reduce damage to the separator 113. Due to the gaps between the separator 113 and the current collector plates 121, 141, capacity loss may occur. Thus, in some embodiments, a separator pressing design may be applied, the separator 113 may be pressed in order to reduce free space and gaps within the structure while the current collector plates 121 and 141 are welded and fixed to the electrode assembly 110. The separator pressing design may refer to the inclusion of a separator pressing allowance spaces at both ends of the separator 113, where the current collector plates 121, 141 are fixed. In some embodiments, the separator pressing allowance spaces are designed to be pressed when the current collector plates 121, 141 are fixed, with specific regions at both ends of the separator 113 may be different from a part that is not pressed even when pressed in terms of physical structure, arrangement method, material, manufacturing process, or coating treatment, etc. In some embodiments, the separator 113 may be composed of the separator pressing allowance space and the part that is not pressed even when pressed. That is, the capacity can be increased through a separator pressing design. In addition, according to some embodiments, as the separator 113 is pressed, the flow of the electrode assembly 110 inside the case is suppressed, thereby eliminating the occurrence of the flow that may occur due to the absence of a structure for holding or supporting the electrode assembly 110 inside the case.

Hereinafter, a method for manufacturing a secondary battery, in which the separator 113 is pressed will be described in more detail with reference to FIGS. 3 to 6. Meanwhile, since both sides of the secondary battery 100 have the same structure, the following description will be made based on the first current collector plate 121.

Referring to FIGS. 3A to 3C, in some examples, after electrically connecting the first current collector plate 121 to the first electrode plate 111 of the electrode assembly 110, the first current collector plate 121 may be pressed by a set pressing amount. Here, the separator pressing allowance space of the separator 113 that protrudes outward from the electrode assembly 110 relative to the first electrode plate 111 may be pressed in the direction of the electrode assembly 110. That is, in some examples, the separator 113 and the first current collector plate 121 may be brought into close contact with each other, so that there is no gap between the separator 113 and the first current collector plate 121. Here, the side surface of the separator 113 may be pressed on the basis of the longitudinal direction of the electrode assembly 110. In addition, in some examples, after electrically connecting the first current collector plate 121 to the first electrode plate 111, the first current collector plate 121 may be pressed by coupling the first insulation plate 191 to one side of the first current collector plate 121 and pressing the first insulation plate 191.

In addition, according to some embodiments, after pressing the first current collector plate 121 by the set pressing amount, internal insulation treatment on the electrode assembly 110 may be performed. Here, an insulating member 190 may be attached to at least one side of the electrode assembly 110 and the first insulation plate 191. That is, in some examples, internal insulation may be performed in a state in which a separator pressing structure is applied.

FIG. 3A shows a state in which the separator 113 and the current collector plates 121, 141 are bonded by welding before pressing, FIG. 3B shows a state in which the insulation plates 191, 192 are respectively bonded to the exterior portions of the current collector plates 121, 141 before pressing, and FIG. 3C shows a state in which internal insulation is performed after pressing and the insulating member 190 is attached. The overall width (W₁) in FIG. 3A, corresponding to a width of the separator 113 plus the gaps between the separator 113 and the current collector plates 121, 141 and the thicknesses of the current collector plates 121, 141, may be, for example, 239.9 mm. The overall width (W₂) in FIG. 3B, corresponding to the overall width (W₁) plus the thicknesses of the insulation plates 191, 192, may be, for example, 254.9 mm. In addition, the overall width (W₃) in FIG. 3C, corresponding to the width after pressing is performed on the overall width (W₂), may be, for example, 252.0 mm. Here, by pressing by the set pressing amount, the gaps between the separator 113 and the current collectors 121 and 141 are eliminated, and the overall width (W₂) shown in FIG. 3B may be reduced. In some examples, a changed length in the separator pressing allowance space after pressing may be 38% to 42% of the length of a separator initial pressing allowance space.

In some examples, the set pressing amount may be set on the basis of the length of an initial gap between the first current collector plate 121 and the separator 113 and the length of an initial separator pressing allowance space between the separator 113 and the first electrode plate 111. The length of the initial gap between the first current collector plate 121 and the separator 113 may refer to the length before the pressing step is performed. For example, the set pressing amount may be set to 0.7% to 1.2% of the length between the outer surface of the first current collector plate 121 before the pressing step and an outer surface of the second current collector plate 141 coupled to the other side of the electrode assembly 110.

In addition, the length of the initial separator pressing allowance space between the separator 113 and the first electrode plate 111 may also refer to the length before the pressing step is performed. That is, the length of the initial separator pressing allowance space can be reduced after the pressing step. That is, an initial design width of the separator 113 may be reduced after the pressing step. The initial design width of the separator 113 may be the sum of the length of the part that is not pressed even when pressed and the length of the initial separator pressing allowance space. For example, the length of the initial separator pressing allowance space may be set to 0.84% to 0.86% of the initial design width of the separator 113.

Referring to FIG. 4, the initial separator pressing allowance space (A) may be set to a length (A=L-B-C) obtained by subtracting the length (B) between an end of the part that is not pressed even when pressed of the separator 113 and a protruding position of the first electrode plate 111 and the length (C) between the protruding position of the first electrode plate 111 and an aligned position of the first electrode plate 111 from the length (L) between the end of the separator pressing allowance space of the separator 113 and the aligned position of the first electrode plate 111. Here, an area corresponding to the length (C) between the protruding position of the first electrode plate 111 and the aligned position of the first electrode plate 111 may be a reversal preventive area of positive and negative electrode positions. In addition, an area corresponding to the length (B) between the end of the separator 113 and the protruding position of the first electrode plate 111 may be a short-circuit preventive area of positive and negative electrodes.

Referring to FIGS. 5 and 6, in some examples, the initial gap (G₁, G₃) between the separator 113 and the first current collector plate 121 before pressing may be, for example, 0.85 mm. In addition, in some examples, the initial width (G₂) of the separator 113 before pressing may be 237.2 mm. Here, the initial design width of the separator 113 may be the sum of the length of a portion that is not pressed even with pressing (e.g., 235.2 mm) and the length of the initial separator pressing allowance space (e.g., 2 mm). One side length (D₁) of the initial separator pressing allowance space may be, for example, 1 mm.

In some examples, after pressing, the separator 113 and the first current collector plate (121) can be in close contact without a gap. In addition, after pressing, the width (G₄) of the separator 113 may be, for example, 236.0 mm. Here, the width of the separator 113 may be the sum of the length of a portion that is not pressed even with pressing (for example, 235.2 mm) and the length of the pressing allowance space of the separator pressed by pressure (for example, 0.8 mm). One side length (D₂) of the separator pressing allowance space may be, for example, 0.4 mm.

Accordingly, the separator 113 may be pressed by pressing, thereby reducing the length of the gap between the separator 113 and the first current collector plate 121 from 0.85 mm to 0 mm. In addition, by pressing on the first current collector plate 121, the length of the separator pressing allowance space may be changed from 1.0 mm to 0.4 mm (D₁ -> D₂). That is, in some examples, the amount of one side pressing may be 0.85 mm + 0.6 mm = 1.45 mm. Accordingly, the width of the separator may be reduced from 237.2 mm to 236.0 mm (G₂ -> G₄).

That is, in some examples, a capacity loss due to gaps between the separator 113 and the collector plates 121 and 141, which are required in a welding process, can be overcome through a separator pressing design. In addition, in some examples, stack flow inside a case can be suppressed through a pressing design.

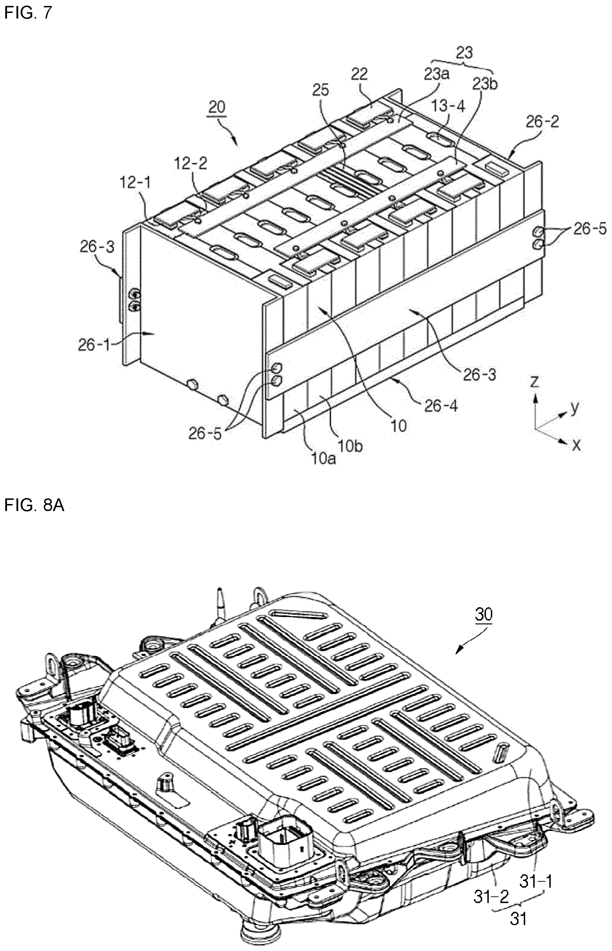

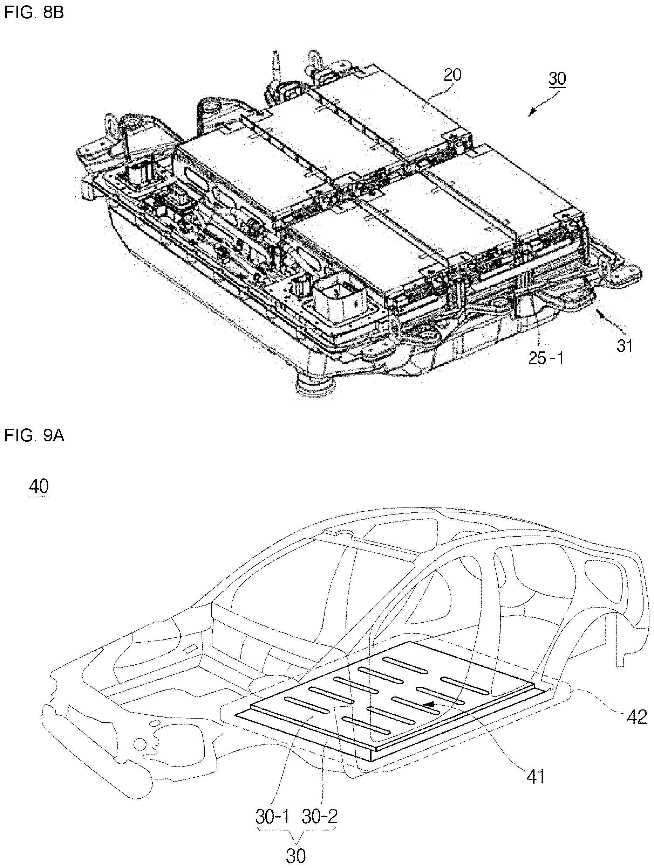

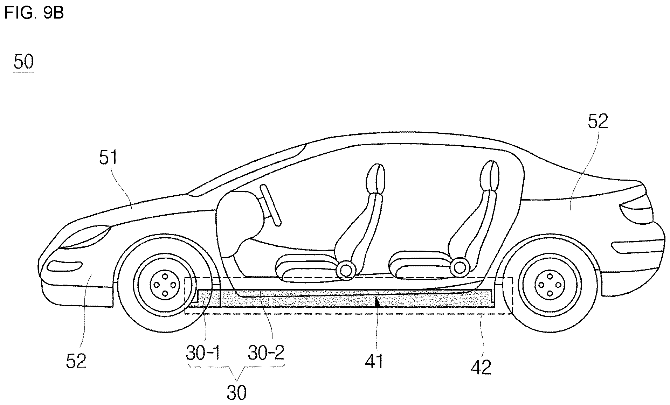

FIG. 7 is a perspective view of an example of a battery module 20. FIGS. 8A and 8B illustrate perspective views of an example of a battery pack 30. And FIGS. 9A and 9B illustrate perspective and side views of examples of a vehicle body 40 and vehicle components.

In some examples, a battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, overcharge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent or reduce inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

Referring to FIG. 7, the battery module 20 includes terminal parts 12-1, 12-2, a plurality of battery cells 10 arranged in one direction, a connection tab 22 connecting a battery cell 10a to an adjacent battery cell 10b of the battery cells 10, and a protection circuit module 23 having one end connected to the connection tab 22. The protection circuit module 23 may include a battery management system (BMS). Further, the connection tab 22 may include a body portion in contact with the terminal parts 12-1, 12-2 between the adjacent battery cells 10a, 10b and an extension portion extending from the body portion and connected to the protection circuit module 23. The connection tab 22 may be, for example, a bus bar.

Each battery cell 10 may include a battery case, an electrode assembly received (or accommodated) in the battery case, and an electrolyte. The electrode assembly and the electrolyte react electrochemically to store and release (e.g., generate) energy. Terminal parts 12-1, 12-2 electrically connected to the connection tab 22 and a vent 13-4 as a discharge passage for gas generated inside the battery case may be provided on one side of (e.g., an upper side of) the battery cell 10. The terminal part 12-1 of the battery cell 10 may be a positive electrode terminal and terminal part 12-2 may be a negative electrode terminal having different polarities from each other, and the terminal parts 12-1, 12-2 of the adjacent battery cells 10a, 10b may be electrically connected to each other in series or parallel by the connection tab 22, to be described in more detail below. Although a serial connection has been described as an example, the connection structure is not limited thereto, and various connection structures may be employed as desired or necessary. In addition, the number and arrangement of battery cells 10 is not limited to the structure shown in FIG. 7 and may be changed as desired or necessary.

The plurality of battery cells 10 may be arranged in (e.g., may be stacked in) one direction so that the wide surfaces of the battery cells 10 face each other, and the plurality of battery cells 10 may be fixed by the housings 26-1, 26-2, 26-3, and 26-4. The housings 26-1, 26-2, 26-3, and 26-4 may include a pair of end plates 26-1 and 26-2 facing the wide surfaces of the battery cell 10 and a side plate 26-3 and a bottom plate 26-4 connecting the pair of end plates 26-1, 26-2 to each other. The side plates 26-3 may support side surfaces of the battery cells 10, and the bottom plate 26-4 may support bottom surfaces of the battery cells 10. In addition, the pair of end plates 26-1 26-2, the side plate 26-3 and the bottom plate 26-4 may be connected by bolts 26-5 and/or any other suitable fastening members and methods known to those of ordinary skill in the art.

The protection circuit module 23 may have electronic components and protection circuits mounted thereon and may be electrically connected to connection tabs 22, to be described in more detail later. The protection circuit module 23 includes a first protection circuit module 23a and a second protection circuit module 23b extending along the direction in which the plurality of battery cells 10 are arranged in different locations. The first protection circuit module 23a and the second protection circuit module 23b may be spaced from each other at a suitable interval (e.g., a set or predetermined interval) and arranged parallel to each other to be electrically connected to adjacent connection tabs 22, respectively. For example, the first protection circuit module 23a extends on one side of the upper portion of the plurality of battery cells 10 along the direction in which the plurality of battery cells 10 are arranged, and the second protection circuit module 23b extends to the other upper side of the plurality of battery cells 10 along the direction in which the plurality of battery cells 10 are arranged. The second protection circuit module 23b may be spaced from the first protection circuit module 23a at a suitable interval (e.g., a set or predetermined interval) with the vents 13-4 interposed therebetween but may be disposed and/or arranged parallel to the first protection circuit module 23a. As such, the two protection circuit modules are spaced from each other side-by-side along the direction in which the plurality of battery cells 10 are arranged, thereby reducing or minimizing the area of the printed circuit board (PCB) constituting the protection circuit module 23. By separately configuring the protection circuit module 23 into two protection circuit modules 23a, 23b, unnecessary PCM area can be reduced or minimized. In addition, the first protection circuit module 23a and the second protection circuit module 23b may be connected to each other by a conductive connection member 25. One side of the conductive connection member 25 is connected to the first protection circuit module 23a, and the other side thereof is connected to the second protection circuit module 23b so that the two protection circuit modules 23a, 23b can be electrically connected with each other.

The connection may be performed by any one of soldering, resistance welding, laser welding, projection welding and/or any other suitable connection methods known to those of ordinary skill in the art.

In addition, the connection member 25 may be, for example, an electric wire. In addition, the connection member 25 may be made of a material having elasticity or flexibility. By the connecting member 25, it may be possible to check and manage whether the voltage, temperature, and/or current of the plurality of battery cells 10 are normal. For example, the information received by the first protection circuit module 23a from connection tabs 22 adjacent to the first protection circuit module 23a, such as voltage, current, and/or temperature, and the information received from connection tabs 22 adjacent to the second protection circuit module 23b, such as voltage, current, and/or temperature, may be integrated and managed by the protection circuit module 23 through the connection member 25.

In addition, when the battery cell 10 swells, shocks may be absorbed by the elasticity or flexibility of the connection member 25, thereby preventing or reducing damage to the first and second protection circuit modules 23a, 23b. In addition, the shape and structure of the connection member 25 is not limited to the shape and structure shown in FIG. 7.

As described above, because the protection circuit module 23 is provided as the first and second protection circuit modules 23a, 23b, the area of the PCB constituting the protection circuit module 23 can be reduced or minimized, and the space inside the battery module 20 can be secured, which improves work efficiency by facilitating a fastening work for connecting the connection tab 22 and the protection circuit module 23 and repair work if (or when) an abnormality is detected in the battery module 20.

FIGS. 8A and 8B illustrate perspective views of an example of the battery pack 30.

The battery pack 30 may include a plurality of the battery modules 20 and a housing 31 for accommodating the plurality of battery modules 20. For example, the housing 31 may include first and second housings 31-1, 31-2 coupled in opposite directions through the plurality of battery modules 20. The plurality of battery modules 20 may be electrically connected to each other by using a bus bar 25-1, and the plurality of battery modules 20 may be electrically connected to each other in a series/parallel or series-parallel mixed method, thereby obtaining desired (e.g., required) electrical output.

FIGS. 9A and 9B illustrate perspective and side views respectively of examples of a vehicle body 40 and vehicle components.

In FIG. 9A, battery pack 30 may include a battery pack cover 30-1, which is a part of a vehicle underbody 41, and a pack frame 30-2 disposed and/or located under the vehicle underbody 41. In some examples, the battery pack cover 30-1 may correspond to the first housing 31-1, and the pack frame 30-2 may correspond to the second housing 31-2. The pack frame 30-2 and the battery pack cover 30-1 may be integrally formed with a vehicle floor 42. The vehicle underbody 41 separates the inside and outside of a vehicle 50, and the pack frame 30-2 may be disposed and/or located outside the vehicle 50.

Referring to FIG. 9B, the vehicle 50 may be formed by combining additional parts, such as a hood 51 in front of the vehicle 50 and fenders 52 respectively located in the front and rear of the vehicle 50 to the vehicle body 40.

The vehicle 50 may include the battery pack 30 that includes the battery pack cover 30-1 and the pack frame 30-2, and the battery pack 30 may be coupled to the vehicle body 40.

Meanwhile, as the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to some embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed and/or located on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. A method for manufacturing a secondary battery, the method comprising:
electrically connecting a first current collector plate to a first electrode plate of an electrode assembly comprising:
the first electrode plate;
a second electrode plate; and
a separator between the first electrode plate and the second electrode plate,
comprising a separator pressing allowance space and a part that is not
pressed even when pressed; and
pressing the first current collector plate in a direction of the electrode assembly by a set pressing amount to press at least a portion of the separator pressing allowance space of the separator that protrudes outward from the electrode assembly relative to the first electrode plate,
wherein the set pressing amount is set based on a length of an initial gap between the first current collector plate and the separator and a length of an initial separator pressing allowance space between the separator and the first electrode plate.

2. The method as claimed in claim 1, wherein the pressing of the first current collector plate comprises bringing the separator and the first current collector plate into close contact with each other, so that there is no gap between the separator and the first current collector plate.

3. The method as claimed in claim 1 or 2, wherein the initial separator pressing allowance space is set to a length obtained by subtracting a length between an end of the part that is not pressed even when pressed of the separator and a protruding position of the first electrode plate and a length between the protruding position of the first electrode plate and an aligned position of the first electrode plate from a length between the end of the separator pressing allowance space of the separator and the aligned position of the first electrode plate.

4. The method as claimed in claim 3, wherein at least one of:
an area corresponding to the length between the protruding position of the first electrode plate and the aligned position of the first electrode plate is a reversal preventive area of positive and negative electrode positions; and
an area corresponding to the length between the end of the separator and the protruding position of the first electrode plate is a positive and negative electrode short preventive area.

5. The method as claimed in any preceding claim, wherein a length of the initial separator pressing allowance space is reduced after the pressing of the first current collector plate.

6. The method as claimed in any preceding claim, wherein an initial design width of the separator is reduced in length after the pressing of the first current collector plate.

7. The method as claimed in any preceding claim, further comprising coupling a first insulation plate to one side of the first current collector plate after electrically connecting the first current collector plate to the first electrode plate,
and wherein optionally attaching an insulation member to at least one side of the electrode assembly and the first insulation plate.

8. The method as claimed in any preceding claim, wherein the pressing of the first current collector plate further comprises pressing on a side surface of the separator based on a longitudinal direction of the electrode assembly.

9. The method as claimed in any preceding claim, wherein the set pressing amount is set to 0.7% to 1.2% of a length between an outer surface of the first current collector plate before the pressing of the first current collector plate and an outer surface of a second current collector plate coupled to the other side of the electrode assembly.

10. The method as claimed in any preceding claim, wherein the length of the initial separator pressing allowance space is set to 0.84% to 0.86% of an initial design width of the separator.

11. The method as claimed in any preceding claim, wherein the changed length of the separator pressing allowance space after the pressing of the first current collector plate is 38% to 42% of the length of the initial separator pressing allowance space.

12. A secondary battery manufactured by the secondary battery manufacturing method as claimed in any one of claims 1 to 11.

13. The secondary battery as claimed in claim 12, wherein an end of a separator and a first current collector plate are brought into close contact with each other without a gap.

14. The secondary battery as claimed in claim 12 or 13, wherein at least a portion of the first current collector plate is coupled to the separator pressing allowance space of the separator.

15. The secondary battery as claimed in claim 12, 13 or 14, comprising:
a case that accommodates the electrode assembly and the first current collector plate, the case being open on both sides;
a first cap plate that seals one side opening of the case; and
a first terminal that is electrically connected to the first current collector plate and is exposed to an exterior portion of the first cap plate,
and optionally further comprising a first protruding current collector plate that is connected to an outer surface of the first current collector plate and is in contact with and coupled to an inner surface of the first terminal.
